# EUROPÄISCHE PATENTSCHRIFT

(11) **EP 1 650 572 B1**
(45) Veröffentlichungstag und Bekanntmachung des Hinweises auf die Patenterteilung: **19.12.2012**
(21) Anmeldenummer: 04105240.8
(22) Anmeldetag: 22.10.2004
(51) Int. Cl.: G01P 3/481, F16H 59/38, F16H 55/17, G01P 3/486

(54) **Zahnrad mit Markierungen zur Geschwindigkeits- und Positionserfassung**
Gear-wheel with markings for determining speed and position
Roue dentée avec marquages pour determiner position et vitesse

(43) Veröffentlichungstag der Anmeldung: 26.04.2006
(73) Patentinhaber: Getrag Ford Transmissions GmbH, 50725 Köln (DE)
(72) Erfinder: Bober, Ralf, 50823, Köln (DE)

(56) Entgegenhaltungen:
- EP-A- 0 911 547
- EP-A- 1 003 041
- DE-A1- 3 420 807
- DE-A1- 3 900 866
- DE-A1- 19 522 840
- DE-A1- 19 531 992
- DE-C1- 4 312 233
- DE-U1- 9 209 744
- FR-A- 2 827 932
- US-A1- 2004 007 067
- PATENT ABSTRACTS OF JAPAN Bd. 1998, Nr. 10, 31. August 1998 (1998-08-31) & JP 10 122904 A (JIDOSHA BUHIN KOGYO CO LTD), 15. Mai 1998 (1998-05-15)
- PATENT ABSTRACTS OF JAPAN Bd. 1998, Nr. 11, 30. September 1998 (1998-09-30) -& JP 10 170534 A (MITSUBISHI DENKI BILL TECHNO SERVICE KK), 26. Juni 1998 (1998-06-26)

## Beschreibung

Die Erfindung betrifft ein Getriebe, insbesondere für ein Kraftfahrzeug, mit mindestens einem Zahnrad, welches mit Markierungen versehen ist, die mittels eines Sensors abtastbar sind.

Wie allgemein aus dem Stand der Technik bekannt ist, werden zur Messung der Drehzahl, zur Messung der Drehrichtung und zur Messung eines momentanen Winkels eines Getriebezahnrades die Zahnflanken des Zahnrades abgetastet.

Aus der DE 195 31 992 A1 ist ein in einem Kaltschmiedeverfahren hergestellter Impulsgeberring bekannt, der in Form eines Zahnrades mit einer Vielzahl von Zähnen vorliegt. Während der Drehung des Zahnrades können die Zähne von einem elektromagnetischen Induktionssensor erfasst werden, wodurch die Drehgeschwindigkeit des Zahnrades bestimmt werden kann.

Auch aus der EP 0 911 547 A1 geht ein Zahnkranz hervor, dessen Zähne bei Rotation des Zahnkranzes von einem magnetischen Sensor erfasst werden, woraus wiederum auf die Rotationsgeschwindigkeit des Zahnkranzes geschlossen werden kann.

In der DE 43 12 233 C1 wird ein Anlasserrotationselement mit einer Anlasseraußenverzahnung beschrieben. Bei dieser Verzahnung handelt es sich um symmetrisch am Umfang angeordnete Ausnehmungen bzw. Einschnitte, die durch eingeschnittene und eingeprägte Laschen gebildet sind. Auch hier wird die umfangseitige Verzahnung zusammen mit einem entsprechenden Sensor für Steuerungsfunktionen benutzt, beispielsweise zur Bestimmung der Drehzahl.

Häufig reicht jedoch bei den bekannten Anordnungen die Anzahl der Zähne nicht aus, um die Parameter mit der gewünschten Genauigkeit zu messen. Außerdem müssen die Sensoren auf die jeweiligen Dimensionen des Zahnrades, wie beispielsweise auf die Zähnezahl oder auf den Zahnraddurchmesser, eingestellt werden.

Alternative Lösungen sehen einen Impulsgeber vor, der an das Zahnrad montiert wird. Solche Impulsgeber können beispielsweise Blechringe oder ringförmige Magnete sein.

In der DE 36 40 360 A1 wird eine Vorrichtung zum Messen der Drehzahl einer Differentialachse beschrieben. In einem stationären Gehäuse rotiert ein drehbares Gehäuse, welches mit Zähnen versehen ist, und welches mit der im Differential herrschenden Drehzahl rotiert. Die Zähne des drehbaren Gehäuses drehen sich relativ zu einem stationären elektronischen Aufnehmer, so dass die Drehzahl der Differentialachse gemessen werden kann. Diese Vorrichtung ist jedoch eine sehr aufwendige Konstruktion.

Die Erfindung hat die Aufgabe, ein Zahnrad der eingangs genannten Art dahingehend zu verbessern, dass die Drehzahl, die Drehrichtung und der momentane Winkel des Zahnrades mit geringstem technischen Aufwand zuverlässig und genau gemessen werden kann.

Die Erfindung löst die gestellte Aufgabe mit einem Getriebe der eingangs genannten Art, bei dem die Markierungen als in das zahnrad eingeschmiedete Vertiefungen ausgebildet und auf einer Kreisbahn angeordnet sind und wobei der Durchmesser der Kreisbahn und die Anzahl der Markierungen unabhängig vom Durchmesser des Zahnrads und von der Zähnezahl des Zahnrads wählbar sind. Diese Markierungen sind entsprechend der gewünschten Messgenauigkeit auf dem Zahnrad angebracht. Um die Messgenauigkeit zu erhöhen, können die Abstände zwischen den einzelnen Markierungen entsprechend niedrig sein. Impulsgeber, die an das Zahnrad montiert werden müssen, können somit zukünftig entfallen, sodass der Gesamtaufwand für die zuverlässige und genaue Messung der Drehzahl, der Drehrichtung und des momentanen Winkels des Zahnrades äußerst gering ist. Die Sensoren können auf den einheitlichen Durchmesser der Kreisbahn, auf welcher die Markierungen angeordnet sind, eingestellt werden, sodass standardisierte Sensoren verwendet werden können.

Vorteilhafterweise können die Markierungen seitlich an dem mindesten einen Zahnrad angeordnet sein.

Bei der Verwendung von metallischen Zahnrädern und/oder metallischen Markierungen kann der Sensor ein induktiver Sensor, ein magneto-resistiver Sensor oder ein Hall-Sensor sein. Solche Sensoren sind Standardbauteile und sind somit kostengünstig.

Nachfolgend wird ein Ausführungsbeispiel eines erfindungsgemäßen Getriebes anhand der beiliegenden Zeichnungen näher erläutert.

Im Einzelnen zeigen:
- Fig. 1: eine Seitenansicht auf ein Zahnrad;
- Fig 2: eine Vorderansicht auf das Zahnrad aus Fig. 1 und auf einen Sensor.

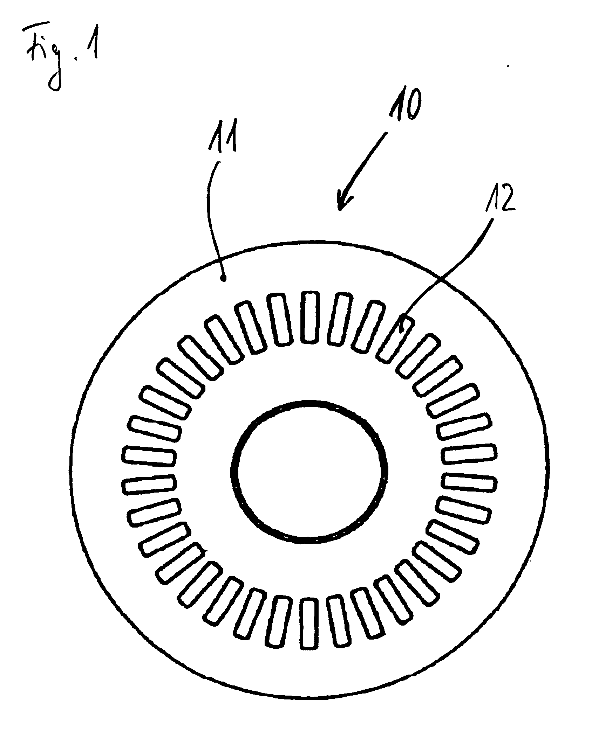

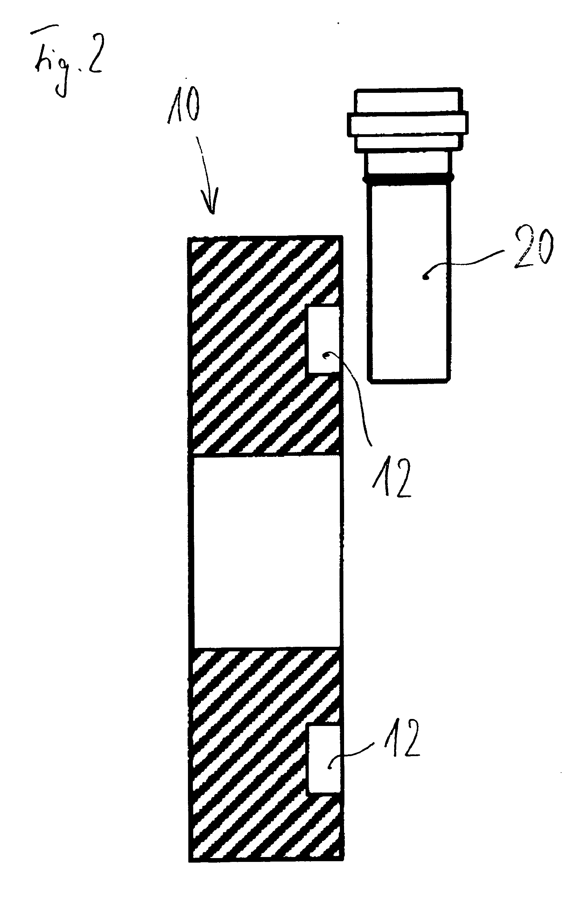

Fig. 1 zeigt ein schematisch dargestelltes Zahnrad 10. Das Zahnrad 10 ist an einer Seitenfläche 11 mit Markierungen 12 versehen. Die Markierungen 12 befinden sich auf einer Kreisbahn. Die Kreisbahn weist unabhängig vom Durchmesser des Zahnrades 10 immer denselben Durchmesser auf. Somit kann ein Sensor 20 (siehe Fig. 2) ein standardisierter Sensor sein, der auf den einheitlichen Durchmesser der Kreisbahn eingestellt ist.

Die Markierungen 12 sind erfindungsgemäß als eingeschmiedete Vertiefungen ausgebildet.

Wenn das Zahnrad 10 und/oder die Markierungen 12 aus einem metallischen Werkstoff gefertigt sind, kann der Sensor 20 ein induktiver Sensor, ein magneto-resisitiver Sensor oder ein Hall-Sensor sein.

### BEZUGSZEICHENLISTE

- 10: Zahnrad
- 11: Seitenfläche
- 12: Markierungen
- 20: Sensor

## Patentansprüche

1. Getriebe, insbesondere für ein Kraftfahrzeug, mit mindestens einem Zahnrad (10), welches mit Markierungen (12) versehen ist, die mittels eines Sensors (20) abtastbar sind, wobei die Markierungen (12) auf einer Kreisbahn angeordnet sind, und wobei der Durchmesser der Kreisbahn und die Anzahl der Markierungen unabhängig vom Durchmesser des Zahnrads (10) und von der Zähnezahl des Zahnrads (10) wählbar sind,**dadurch gekennzeichnet, dass** die Markierungen (12) als in das Zahnrad (10) eingeschmiedete Vertiefungen ausgebildet sind.

2. Getriebe nach Anspruch 1, **dadurch gekennzeichnet, dass** die Markierungen (12) seitlich an dem Zahnrad (10) angeordnet sind.

## Claims

1. Gear mechanism, in particular for a motor vehicle, having at least one gearwheel (10) which is provided with markings (12) which can be sensed by means of a sensor (20), wherein the markings (12) are arranged on a circular path, and wherein the diameter of the circular path and the number of markings can be selected independently of the diameter of the gearwheel (10) and of the number of teeth of the gearwheel (10), **characterized in that** the markings (12) are formed as depressions forged into the gearwheel (10).

2. Gear mechanism according to Claim 1, **characterized in that** the markings (12) are arranged on the side of the gearwheel (10).

## Revendications

1. Boîte de vitesses, en particulier pour un véhicule automobile, comprenant au moins une roue dentée (10), qui est pourvue de marquages (12) qui peuvent être détectés par un capteur (20), les marquages (12) étant disposés sur une piste circulaire et le diamètre de la piste circulaire et le nombre des marquages pouvant être sélectionnés indépendamment du diamètre de la roue dentée (10) et du nombre de dents de la roue dentée (10), **caractérisée en ce que** les marquages (12) sont réalisés sous forme de renfoncements forgés à l'intérieur de la roue dentée (10).

2. Boîte de vitesses selon la revendication 1, **caractérisée en ce que** les marquages (12) sont disposés latéralement sur la roue dentée (10).
